Europäisches Patentamt

European Patent Office

Office européen des brevets

(19)

(11) EP 0 582 492 B1

(12) **FASCICULE DE BREVET EUROPEEN**

(45) Date de publication et mention
de la délivrance du brevet:
**11.08.1999 Bulletin 1999/32**

(51) Int Cl.⁶: **G01N 29/10**, G01N 29/20

(21) Numéro de dépôt: **93401173.5**

(22) Date de dépôt: **06.05.1993**

(54) **Procédé et dispositif de contrôle du contact de deux tôles placées bord à bord**

Verfahren und Vorrichtung zur Überwachung des Kontakts zwischen zwei Blechkanten

Method and apparatus for testing contact between two metal sheets placed side by side

(84) Etats contractants désignés:
AT BE CH DE DK ES FR GB IT LI LU NL PT SE

(30) Priorité: **04.08.1992 FR 9209670**

(43) Date de publication de la demande:
**09.02.1994 Bulletin 1994/06**

(73) Titulaire: **SOLLAC**
**92800 Puteaux (FR)**

(72) Inventeur: **Guth, Jérôme**
**F-59140 Dunkerque (FR)**

(74) Mandataire: **Lanceplaine, Jean-Claude et al**
**CABINET LAVOIX**
**2, Place d'Estienne d'Orves**
**75441 Paris Cédex 09 (FR)**

(56) Documents cités:
EP-A- 0 073 893          EP-A- 0 235 030
GB-A- 2 208 713          US-A- 3 436 958

# Description

La présente invention a pour objet un procédé et un dispositif de contrôle du contact de deux tôles placées bord à bord, par exemple pour le soudage de ces tôles au moyen d'un faisceau laser.

Le soudage laser a trouvé un débouché industriel important notamment dans la production de flans raboutés, par exemple pour l'industrie automobile.

Le soudage bord à bord de tôles au moyen d'un faisceau laser est réalisé sans métal d'apport et demande de très hautes exigences de précision, de forme et de position des tôles à souder.

A cet effet, les tôles doivent avoir été préalablement coupées au moyen d'une cisaille ou d'un faisceau laser avec une précision telle que le jeu entre lesdites tôles soit minimum pour assurer une bonne qualité de contact entre les tôles au niveau du plan de joint.

Si la qualité du contact au niveau du plan de joint entre les tôles à souder est incorrecte, c'est à dire si le jeu entre les tôles à souder est trop important, il peut arriver que le joint soudé ne soit pas continu et présente des trous.

D'autre part, si le jeu entre les tôles au niveau du plan de joint est localement trop important, le joint soudé peut présenter un effondrement.

Un tel effondrement du plan de joint est toléré, si il ne dépasse pas certaines limites.

Ainsi, les normes définies par les constructeurs automobiles imposent pour que des tôles dont l'épaisseur est inférieure à 1mm, la valeur totale de l'effondrement du joint soudé, c'est à dire le cumul de la valeur de l'effondrement en partie supérieure et en partie inférieure des tôles, ne doit pas dépasser 20% de l'épaisseur de la tôle de plus faible épaisseur.

De même, pour des tôles d'épaisseur supérieure à 1mm, la valeur totale de l'effondrement du joint soudé ne doit pas dépasser 10% de l'épaisseur de la tôle de plus faible épaisseur.

Pour limiter ces risques de joints non continus ou d'effondrements trop importants, il est connu d'améliorer la qualité de cisaillage des tôles afin de limiter les ondulations des arêtes de coupe et d'assurer un meilleur contact des tôles entre elles pour mieux maîtriser le jeu entre lesdites tôles.

Mais, pour obtenir un tel résultat, il est nécessaire d'utiliser des cisailles très précises ou des cisailles doubles permettant de couper simultanément avec la même lame, les deux tôles à rabouter.

Il est également connu d'effectuer la soudure avec un fil d'apport consommable se déroulant au point de soudage.

Ce métal supplémentaire en fusion permet de combler les jeux présents entre les tôles.

Il est d'autre part connu de former préalablement les faces latérales des tôles destinées à être raboutées par exemple par martelage avant soudage.

Cette opération permet d'obtenir un renflement vertical de métal sur les bords des faces latérales afin de fournir de la matière supplémentaire au niveau des jeux pendant le soudage.

Mais, dans les deux cas, les soudures produites présentent souvent des bourrelets au niveau de la face supérieure et également de la face inférieure.

Ces bourrelets endommagent le poinçon et la matrice lors d'un emboutissage ultérieur de la pièce soudée et cela est d'autant plus significatif que la zone affectée thermiquement et la zone fondue possèdent, surtout en surface, une dureté au moins deux fois supérieure à la dureté du métal de base.

Malgré, les techniques de découpe utilisées par exemple au moyen de cisailles de précision ou d'un faisceau laser, il arrive que les conditions au niveau du plan de joint des tôles ne soit pas remplies et que le joint soudé présente des effondrements ou ne soit pas continu.

Jusqu'à présent, on connaît des dispositifs qui permettent de contrôler le joint soudé après sa formation (US-A-3 436 958), par exemple par ultrason ou par rayons X afin de déterminer les porosités.

Dans le dispositif qui vient d'être mentionné on réalise une photo d'une zone soudée et on analyse la photo.

Mais, cette technique présente des inconvénients qui résident principalement dans le fait que le contrôle est un contrôle statistique sur des échantillons, réalisé après la formation de la soudure.

De ce fait, dans le cas de la détection d'un défaut, les pièces réalisées depuis le précédent contrôle doivent être rebutées.

On connaît également une autre technique de contrôle de la soudure pendant sa formation à l'aide d'un micro qui enregistre le bruit de l'impact du faisceau laser sur les bords des tôles à souder de façon à déterminer des courbes représentatives de la qualité de la soudure.

Mais, si cette technique présente l'avantage de pouvoir réaliser le contrôle en continu, elle est difficilement industrialisable, compte tenu des bruits environnants qui existent dans les ateliers.

De plus, chaque pièce soudée qui présente un défaut doit être rebutée.

D'autre part, ces techniques ne permettent pas de détecter un décalage vertical entre les tôles.

La présente invention a pour but de proposer un procédé et un dispositif de contrôle de la qualité du contact entre deux tôles placées bord à bord, avant la réalisation du joint soudé.

La présente invention a donc pour objet un procédé de contrôle de la qualité du contact de deux tôles placées bord à bord avant la réalisation d'un joint soudé, par exemple pour le soudage desdites tôles au moyen d'un faisceau laser, caractérisé en ce que :

-    on émet au moins un signal ultrasonore se propageant dans une des deux tôles, ledit signal ultrasonore traversant le plan de joint desdites tôles sur toute sa hauteur et se propageant dans la seconde tôle,

- on capte ledit signal ultrasonore dans la seconde tôle,
- et on détermine la qualité du contact des deux tôles au niveau du plan de joint en comparant ledit signal ultrasonore capté par rapport audit signal ultrasonore émis.

Selon d'autres caractéristiques de l'invention :

- on compare l'intensité du signal ultrasonore à l'intensité du signal ultrasonore émis,
- on compare la fréquence du signal ultrasonore capté à la fréquence du signal ultrasonore émis,
- on détermine préalablement à l'opération de contrôle de la qualité du contact les pertes d'intensité du signal ultrasonore à l'intérieur des tôles en émettant le signal ultrasonore dans une tôle et en le captant dans la même tôle,
- la propagation du signal dans les tôles s'effectue sous la forme d'ondes de Lamb.

La présente invention a également pour objet un dispositif de contrôle du contact de deux tôles placées bord à bord pour la mise en oeuvre du procédé mentionné ci-dessus, caractérisé en ce qu'il comprend :

- au moins un capteur émetteur d'au moins un signal ultrasonore placé sur une première tôle et formant au moins un faisceau d'ultrasons se propageant dans cette tôle et traversant le plan de joint de ces deux tôles sur toute sa hauteur,
- au moins un capteur récepteur dudit signal ultrasonore se propageant dans la seconde tôle et disposé sur cette tôle,
- et des moyens de comparaison dudit signal ultrasonore capté par rapport audit signal ultrasonore émis pour comparer l'amplitude ou la bande passante en fréquence desdits signaux et déterminer la qualité du contact des deux tôles au niveau du plan de joint.

Selon d'autres caractéristiques de l'invention :

- ledit capteur émetteur et ledit capteur récepteur sont disposés chacun sur des faces des tôles,
- ledit capteur émetteur et ledit capteur récepteur sont disposés chacun sur une des faces des tôles et du même côté,
- ledit capteur émetteur est disposé sur une face de la première tôle et ledit capteur récepteur est disposé sur une face de la seconde tôle opposée à ladite face de la première tôle,
- la largeur 1 du faisceau d'ultrasons est:

$$1 \geq h \, tg \, \alpha$$

où h est la hauteur du plan de joint desdites tôles et α est l'angle d'incidence dudit faisceau d'ultrasons,

- ledit capteur émetteur et ledit capteur récepteur sont disposés chacun sur un des bords desdites tôles, opposé au plan de joint de ces tôles,
- la largeur du faisceau d'ultrasons est supérieure ou égale à la hauteur du plan de joint des tôles,
- les capteurs émetteurs et les capteurs récepteurs sont disposés dans un boîtier déplaçable, d'une part, perpendiculairement aux tôles et, d'autre part, parallèlement à ces tôles et à une vitesse identique à la vitesse desdites tôles.
- les capteurs émetteurs et les capteurs récepteurs sont disposés dans un boîtier fixe, en contact avec les tôles, lesquelles défilent sous ledit boîtier.

Les caractéristiques et avantages de l'invention apparaîtront au cours de la description qui va suivre, donnée uniquement à titre d'exemple, faite en référence aux dessins annexés dans lesquels :

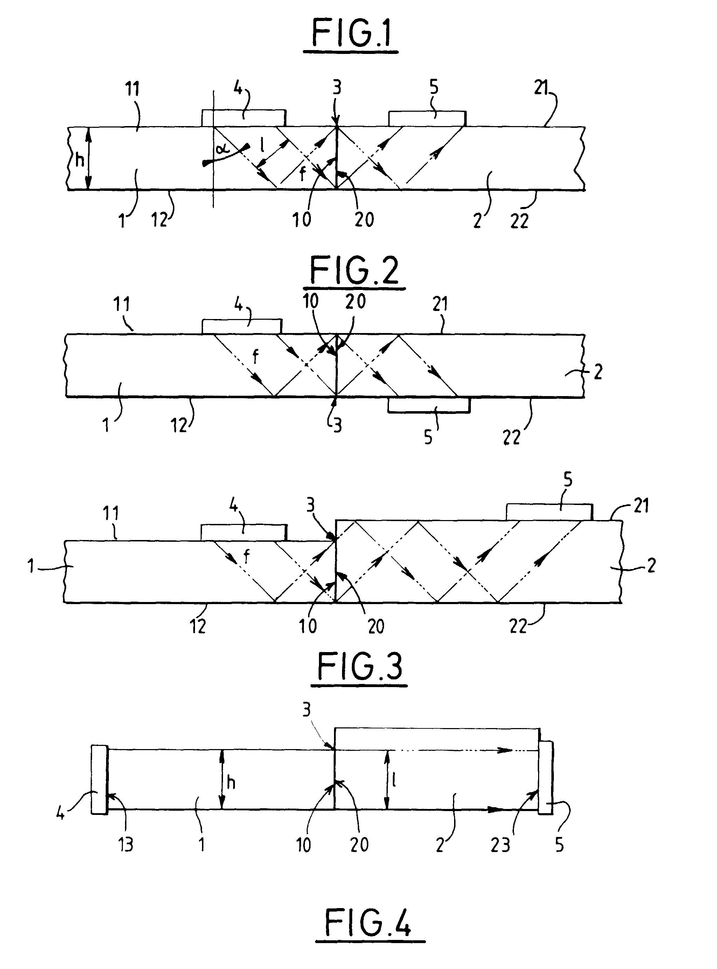

- les Figs. 1 à 4 sont des vues schématiques en élévation de deux tôles équipées du dispositif de contrôle conforme à la présente invention, selon différents modes de réalisation.

Le procédé selon la présente invention consiste à contrôler la qualité du contact de deux tôles 1 et 2 placées bord à bord avant une opération de soudage, par exemple au moyen d'un faisceau laser.
Comme représenté sur les Figs. 1 à 4, les tôles 1 et 2 peuvent être d'épaisseur identique ou de différentes épaisseurs et sont placées l'une contre l'autre au niveau d'un de leurs bords, respectivement 10 et 20 de façon à former un plan de joint 3 sur lequel sera réalisé un joint soudé.
Le procédé selon la présente invention consiste :

- à émettre un signal ultrasonore se propageant dans la tôle 1, ledit signal ultrasonore traversant le plan de joint 3 desdites tôles sur toute sa hauteur et se propageant dans la tôle 2,
- à capter ledit signal ultrasonore dans la tôle 2,
- et à déterminer la qualité du contact des deux tôles 1 et 2 au niveau du plan de joint 3 en comparant le signal ultrasonore capté par rapport au signal ultrasonore émis.

On peut soit comparer l'intensité du signal ultrasonore capté à l'intensité du signal ultrasonore émis, soit comparer la fréquence du signal ultrasonore capté à la fréquence du signal ultrasonore émis.
Pour cela et comme représenté sur les Figs. 1 à 4, le dispositif de contrôle selon la présente invention comporte :

- au moins un capteur émetteur 4 d'au moins un signal ultrasonore placé sur la tôle 1 et formant au moins un faisceau d'ultrasons f se propageant dans cette tôle 1 et traversant le joint 3 sur toute sa hauteur,
- au moins un capteur récepteur 5 dudit signal ultrasonore se propageant dans la tôle 2 et disposé sur cette tôle 2,
- et des moyens classiques, non représentés, de comparaison dudit signal ultrasonore capté par rapport audit signal ultrasonore émis pour déterminer la qualité du contact des deux tôles 1 et 2 au niveau du plan de joint 3.

Comme représenté sur les Figs. 1 à 3, le capteur émetteur 4 et le capteur récepteur 5 sont disposés sur les faces des tôles 1 et 2.

Selon un premier mode de réalisation représenté à la Fig. 1, le capteur émetteur 4 est disposé sur la face supérieure 11 de la tôle 1 et le capteur récepteur 5 est disposé sur la face supérieure 21 de la tôle 2.

Selon un second mode de réalisation représenté à la Fig. 2, le capteur émetteur 4 est disposé sur la face supérieure 11 de la tôle 1 et le capteur récepteur 5 est disposé sur la face inférieure 22 de la tôle.

Le capteur émetteur 4 et le capteur récepteur 5 peuvent être placés sur les faces inférieures 12 et 22 des tôles 1 et 2, et le capteur émetteur 4 peut être placé sur la face inférieure 12 de la tôle 1 et le capteur récepteur 5 peut être placé sur la face supérieure 21 de la tôle 2.

Le dispositif de contrôle selon la présente invention peut également être utilisé pour des tôles 1 et 2 de différentes épaisseurs, comme représenté sur la Fig. 3.

Dans ce cas également le capteur émetteur 4 et le capteur récepteur 5 peuvent être disposés sur les faces supérieures 11 et 21 des tôles 1 et 2 ou sur les faces inférieures 12 et 22 de ces tôles.

Comme pour le mode de réalisation représenté à la Fig. 2, le capteur émetteur 4 peut être disposé sur la face supérieure 11 de la tôle 1 et le capteur récepteur 5 peut être disposé sur la face inférieure 22 de la tôle ou inversement.

D'une manière générale, les capteurs 4 et 5 sont des capteurs connus de type oblique et le faisceau d'ultrasons f a un angle d'incidence α.

Pour que le faisceau f traverse le plan de joint 3 sur toute sa hauteur, on a :

$$1 \geq h \operatorname{tg} \alpha$$

ou l représente la largeur du faisceau d'ultrasons f, h représente la hauteur du plan de joint 3, c'est à dire la hauteur de la tôle 1 ou 2 la moins épaisse, et α représente l'angle d'incidence du faisceau d'ultrasons f.

Cette condition permet de déterminer avec précision les positions du capteur émetteur 4 et du capteur récepteur 5 sur les tôles 1 et 2 afin que le faisceau d'ultrasons f couvre au moins toute la hauteur h du plan de joint 3.

Selon un autre mode de réalisation représenté à la Fig. 4, le capteur émetteur 4 est disposé sur le bord 13 de la tôle 1 opposé au bord 10 de ladite tôle et le capteur récepteur 5 est disposé sur le bord 23 de la tôle 2 opposée au bord 20 de ladite tôle.

Dans ce cas, le faisceau d'ultrasons f se propage parallèlement aux faces des tôles 1 et 2, c'est à dire perpendiculairement au plan de joint 3 et la largeur de ce faisceau f est supérieure ou égale à la largeur h du plan de joint 3 ou à l'épaisseur de la tôle la moins épaisse.

Le dispositif de contrôle de la qualité du contact des tôles 1 et 2 au niveau du plan de joint 3 fonctionne de la manière suivante.

Le signal d'ultrasons émis par le capteur émetteur 4 se propage dans la tôle 1, traverse le plan de joint 3 sur toute sa hauteur, puis se propage dans la tôle 2 et est capté par le capteur récepteur 5.

Des moyens appropriés, non représentés, comparent le signal ultrasonore capté par rapport au signal ultrasonore émis, ce qui permet de détecter des jeux éventuels entre les deux tôles 1 et 2 au niveau du plan de joint 3.

En effet, si il existe un jeu au niveau du plan de joint 3, la réponse en amplitude est faible et la bande passante en fréquence est étroite.

Si au contraire les tôles 1 et 2 sont parfaitement en contact la transmission d'une tôle à l'autre est bonne.

Préalablement à l'opération de contrôle de la qualité du contact entre les tôles 1 et 2, on détermine les pertes d'intensité du signal ultrasonore à l'intérieur des tôles 1 et 2 en émettant le signal ultrasonore dans une tôle et en le captant dans la même tôle.

Selon une variante, la propagation dudit signal dans les tôles 1 et 2 s'effectue sous la forme d'ondes de Lamb.

Pour contrôler une longueur déterminée du plan de joint 3 par exemple égale à 50cm et pour effectuer un contrôle continu, le dispositif peut comporter vingt capteurs émetteurs 4 et vingt capteurs récepteurs 5 placés dans un boîtier, non représenté, et disposés de part et d'autre du plan de joint 3.

Ce boîtier peut être déplaçable, d'une part, perpendiculairement aux tôles 1 et 2 pour amener les capteurs en contact avec lesdites tôles et, d'autre part, parallèlement à ces tôles et à une vitesse identique à la vitesse de déplacement desdites tôles.

Après un contrôle d'une première longueur du plan de joint 3, le boîtier est soulevé, puis revient en arrière d'une distance sensiblement inférieure à la longueur du plan de joint préalablement contrôlé et redescend sur les tôles pour effectuer un nouveau contrôle, la nouvelle longueur contrôlée chevauchant légèrement la première longueur du plan de joint 3 de façon à effectuer un contrôle continu sur toute la longueur de ce plan de joint.

Les capteurs émetteurs 4 et les capteurs récepteurs 5 peuvent être disposés dans un boîtier fixe en contact avec les tôles 1 et 2, lesquelles défilent sous ledit boîtier.

Le dispositif de contrôle selon la présente invention a un temps de réponse quasi-instantané si bien que ce type de contrôle ne constitue pas un obstacle dans l'accostage des tôles en continu puisqu'il peut être effectué plus vite que la vitesse de soudage.

Par ailleurs, ce dispositif permet de détecter des jeux très faibles et est indépendant des perturbations extérieures.

Enfin, le dispositif selon la présente invention permet de contrôler la qualité du contact entre les tôles avant l'opération de soudage ce qui évite un rebut important de pièces.

## Revendications

1. Procédé de contrôle de la qualité du contact de deux tôles (1, 2) placées bord à bord, avant la réalisation d'un joint soudé, par exemple pour le soudage desdites tôles au moyen d'un faisceau laser, caractérisé en ce que :

   - on émet au moins un signal ultrasonore se propageant dans une (1) des deux tôles (1, 2), ledit signal ultrasonore traversant le plan de joint (3) desdites tôles sur toute sa hauteur et se propageant dans la seconde tôle (2),
   - on capte ledit signal ultrasonore dans la seconde tôle (2),
   - et on détermine la qualité de contact des deux tôles (1, 2) au niveau du plan de joint (3) en comparant ledit signal ultrasonore capté par rapport audit signal ultrasonore émis.

2. Procédé selon la revendication 1, caractérisé en ce que l'on compare l'intensité du signal ultrasonore capté à l'intensité du signal ultrasonore émis.

3. Procédé selon la revendication 1, caractérisé en ce que l'on compare la fréquence du signal ultrasonore capté à la fréquence du signal ultrasonore émis.

4. Procédé selon la revendication 1, caractérisé en ce que l'on détermine préalablement à l'opération de contrôle de la qualité du contact les pertes d'intensité du signal ultrasonore à l'intérieur des tôles (1, 2) en émettant ledit signal ultrasonore dans une tôle (1, 2) et en le captant dans la même tôle (1, 2).

5. Procédé selon la revendication 1, caractérisé en ce que la propagation du signal dans les tôles (1, 2) s'effectue sous la forme d'ondes de Lamb.

6. Dispositif de contrôle du contact de deux tôles (1, 2) placées bord à bord, pour la mise en oeuvre du procédé selon l'une quelconque des revendications précédentes, caractérisé en ce qu'il comprend:

   - au moins un capteur émetteur (4) d'au moins un signal ultrasonore placé sur une première tôle (1) et formant au moins un faisceau d'ultrasons f se propageant dans cette tôle (1) et traversant le plan de joint (3) des deux tôles (1, 2) sur toute sa hauteur h,
   - au moins un capteur récepteur (5) dudit signal ultrasonore se propageant dans la seconde tôle (2), disposé sur cette tôle,
   - et des moyens de comparaison dudit signal ultrasonore capté par rapport audit signal ultrasonore émis pour comparer l'amplitude ou la bande passante en fréquence desdits signaux et déterminer la qualité du contact des deux tôles (1, 2) au niveau du plan de joint (3) avant la réalisation d'un joint soudé.

7. Dispositif selon la revendication 6, caractérisé en ce que ledit capteur émetteur (4) et ledit capteur récepteur (5) sont disposés chacun sur une des faces (11, 12 ; 21, 22) desdites tôles (1, 2).

8. Dispositif selon les revendications 6 et 7, caractérisé en ce que ledit capteur émetteur (4) et ledit récepteur (5) sont disposés chacun sur une des faces (11, 12 ; 21, 22) desdites tôles (1, 2) et du même côté.

9. Dispositif selon les revendications 6 et 7, caractérisé en ce que ledit capteur émetteur est disposé sur une face (ll, 12) de la première tôle (1) et ledit capteur récepteur (5) est disposé sur une face (21, 22) de la seconde tôle (2) opposée à ladite face de la première tôle (1).

10. Dispositif selon l'une quelconque des revendications 6 à 9, caractérisé en ce que la largeur 1 du faisceau d'ultrasons f est :

$$1 \geq h \, tg \, \alpha$$

où h est la hauteur du plan de joint (3) desdites tôles (1, 2)
et $\alpha$ est l'angle d'incidence du faisceau d'ultrasons f.

11. Dispositif selon la revendication 6, caractérisé en ce que ledit capteur émetteur (4) et ledit capteur récepteur (5) sont disposés chacun sur un des bords (13, 23) desdites tôles (1, 2), opposés au plan de joint (3) de ces tôles (1, 2).

**12.** Dispositif selon les revendications 6 et 11, caractérisé en ce que la largeur 1 du faisceau d'ultrason f est supérieure ou égale à la hauteur h du plan de joint (3) des tôles (1 et 2).

**13.** Dispositif selon les revendications 6 et 8, caractérisé en ce que les capteurs émetteurs (4) et les capteurs récepteurs (5) sont disposés dans un boîtier déplaçable, d'une part, perpendiculairement aux tôles (1, 2) et, d'autre part, parallèlement à ces tôles (1, 2) et à une vitesse identique à la vitesse de déplacement desdites tôles.

**14.** Dispositif selon les revendications 6 et 8, caractérisé en ce que les capteurs émetteurs (4) et les capteurs récepteurs (5) sont disposés dans un boîtier fixe en contact avec les tôles (1, 2), lesquelles défilent sous ledit boîtier.

**Patentansprüche**

**1.** Verfahren zur Überwachung der Qualität des Kontakts zwischen zwei stumpf gestoßenen Blechen (1, 2) vor der Herstellung einer Schweißverbindung beispielsweise zum Verschweißen der Bleche mit Hilfe eines Laserstrahls, dadurch gekennzeichnet, daß man

- mindestens ein Ultraschallsignal sendet, das sich in einem (1) der beiden Bleche (1, 2) ausbreitet und die Stoßebene (3) der Bleche auf ihrer ganzen Höhe durchquert und sich im zweiten Blech (2) ausbreitet,
- das Ultraschallsignal im zweiten Blech (2) aufnimmt und
- die Qualität des Kontakts der beiden Bleche (1, 2) auf Höhe der Stoßebene (3) bestimmt, indem man das aufgenommene Ultraschallsignal mit dem gesendeten Ultraschallsignal vergleicht.

**2.** Verfahren nach Anspruch 1, dadurch gekennzeichnet, daß die Stärke des aufgenommenen Ultraschallsignals mit der Stärke des gesendeten Signals vergleicht.

**3.** Verfahren nach Anspruch 1, dadurch gekennzeichnet, daß man die Frequenz des aufgenommenen Ultraschallsignals mit der Frequenz des gesendeten Ultraschallsignals vergleicht.

**4.** Verfahren nach Anspruch 1, dadurch gekennzeichnet, daß man vor der Überwachung der Qualität des Kontakts die Stärkeverluste des Ultraschallsignals im Inneren der Bleche (1, 2) bestimmt, indem man das Ultraschallsignal in einem Blech (1, 2) sendet und es im selben Blech (1, 2) aufnimmt.

**5.** Verfahren nach Anspruch 1, dadurch gekennzeichnet, daß die Ausbreitung des Signals in den Blechen (1, 2) in Form von Lamb-Wellen stattfindet.

**6.** Vorrichtung zur Überwachung des Kontakts von zwei stumpf gestoßenen Blechen (1, 2) zur Durchführung des Verfahrens nach einem der vorhergehenden Ansprüche, dadurch gekennzeichnet, daß es folgendes umfaßt:

- mindestens einen Sendefühler (4) für mindestens ein Ultraschallsignal, der auf einem ersten Blech (1) angeordnet ist und mindestens ein Ultraschallbündel f bildet, das sich in diesem Blech (1) ausbreitet und die Stoßebene (3) der beiden Bleche (1, 2) auf ihrer ganzen Höhe h durchquert,
- mindestens einen auf dem zweiten Blech angeordneten Empfangsfühler (5) für das Ultraschallsignal, das sich in diesem zweiten Blech (2) ausbreitet, und
- Einrichtungen zum Vergleichen des aufgenommenen Ultraschallsignals mit dem gesendeten Ultraschallsignal, um die Amplitude oder den Frequenzdurchlaßbereich dieser Signale zu vergleichen und die Qualität des Kontakts der beiden Bleche (1, 2) auf Höhe der Stoßebene (3) vor der Herstellung einer Schweißverbindung zu bestimmen.

**7.** Vorrichtung nach Anspruch 6, dadurch gekennzeichnet, daß der Sendefühler (4) und der Empfangsfühler (5) jeweils auf einer der Seiten (11, 12; 21, 22) der Bleche (1, 2) angeordnet sind.

**8.** Vorrichtung nach den Ansprüchen 6 und 7, dadurch gekennzeichnet, daß der Sendefühler (4) und der Empfangsfühler (5) jeweils auf einer der Seiten (11, 12; 21, 22) der Bleche (1, 2) und auf derselben Seite angeordnet sind.

**9.** Vorrichtung nach den Ansprüche 6 und 7, dadurch gekennzeichnet, daß der Sendefühler auf einer Seite (11, 12) des ersten Blechs (1) und der Empfangsfühler (5) auf einer dieser Seite des ersten Blechs entgegengesetzten Seite (21, 22) des zweiten Blechs (2) angeordnet ist.

**10.** Vorrichtung nach einem der Ansprüche 6 bis 9, dadurch gekennzeichnet, daß die Breite 1 des Ultraschallbündels f beträgt:

$$1 \geq h \, tg \, \alpha$$

worin h die Höhe der Stoßebene (3) der Bleche (1, 2) und a der Einfallswinkel des Ultraschallbündels f ist.

**11.** Vorrichtung nach Anspruch 6, dadurch gekennzeichnet, daß der Sendefühler (4) und der Empfangsfühler (5) jeweils auf einer der der Stoßebene (3) der Bleche (1, 2) entgegengesetzten Kanten (13, 23) dieser Bleche (1, 2) angeordnet sind.

**12.** Vorrichtung nach Anspruch 6 und 11, dadurch gekennzeichnet, daß die Breite 1 des Ultraschallbündels f größer als oder gleich der Höhe h der Stoßebene (3) der Bleche (1 und 2) ist.

**13.** Vorrichtung nach den Ansprüchen 6 und 8, dadurch gekennzeichnet, daß die Sendefühler (4) und die Empfangsfühler (5) in einem Gehäuse angeordnet sind, das einerseits senkrecht zu den Blechen (1, 2) und andererseits parallel zu diesen Blechen (1, 2) und mit einer Geschwindigkeit, die gleich der Bewegungsgeschwindigkeit dieser Bleche ist, beweglich ist.

**14.** Vorrichtung nach den Ansprüche 6 und 8, dadurch gekennzeichnet, daß die Sendefühler (4) und die Empfangsfühler (5) in einem feststehenden Gehäuse angeordnet sind, das mit den Blechen (1, 2) in Kontakt ist, die sich unter diesem Gehäuse vorbeibewegen.

**Claims**

**1.** Process for monitoring the quality of contact between two metal plates (1, 2) placed edge to edge before the production of a welded joint, for example for welding said plates by means of a laser beam, characterised in that:

at least one ultrasound signal is emitted which is propagated in one (1) of the two plates (1, 2), said ultrasound signal passing through the joining plane (3) of said plates over its full height and being propagated in the second plate (2), said ultrasound signal is picked up in the second plate (2), and the quality of contact between the two plates (1, 2) is determined at the joining plane (3) by comparing the ultrasound signal picked up with the ultrasound signal emitted.

**2.** Process according to claim 1, characterised in that the intensity of the ultrasound signal picked up is compared with the intensity of the ultrasound signal emitted.

**3.** Process according to claim 1, characterised in that the frequency of the ultrasound signal picked up is compared with the frequency of the ultrasound signal emitted.

**4.** Process according to claim 1, characterised in that, prior to the operation of monitoring the quality of contact, the losses of intensity of the ultrasound signal inside the plates (1, 2) are determined by emitting said ultrasound signal into a plate (1, 2) and picking it up in the same plate (1, 2).

**5.** Process according to claim 1, characterised in that the signal is propagated in the plates (1, 2) in the form of Lamb waves.

**6.** Apparatus for monitoring the contact between two metal plates (1, 2) placed edge to edge, for carrying out the process according to any one of the preceding claims, characterised in that it comprises:

at least one pick-up (4) emitting at least one ultrasound signal, placed on a first metal plate (1) and forming at least one ultrasound beam f which is propagated in said plate (1) and passes through the joining plane (3) of the two metal plates (1, 2) over its full height h, at least one pick-up (5) receiving said ultrasound signal which is propagated in the second plate (2), arranged on this plate, and means for comparing said ultrasound signal picked up with said ultrasound signal emitted in order to compare the amplitude or the frequency bandwidth of said signals and determine the quality of contact between the two plates (1, 2) at the joining plane (3) before a welded joint is produced.

**7.** Apparatus according to claim 6, characterised in that the emitting pick-up (4) and the receiving pick-up (5) are each arranged on one of the faces (11, 12; 21, 22) of said plates (1, 2).

**8.** Apparatus according to claims 6 and 7, characterised in that the emitting pick-up (4) and the receiving pick-up (5) are each arranged on one of the faces (11, 12; 21, 22) of said plates (1, 2) and on the same side.

**9.** Apparatus according to claims 6 and 7, characterised in that the emitting pick-up is arranged on one face (11, 12) of the first plate (1) and the receiving pick-up (5) is arranged on one face (21, 22) of the second plate (2) opposite said face of the first plate (1).

**10.** Apparatus according to any one of claims 6 to 9, characterised in that the width 1 of the ultrasound beam f is:

$$1 \geq h \, tg \, \alpha$$

where h is the height of the joining plane (3) of said plates (1, 2) and $\alpha$ is the angle of incidence of the ultrasound beam f.

11. Apparatus according to claim 6, characterised in that the emitting pick-up (4) and the receiving pick-up (5) are each arranged on one of the edges (13, 23) of said plates (1, 2), opposite the joining plane (3) of the plates (1, 2).

12. Apparatus according to claims 6 and 11, characterised in that the width 1 of the ultrasound beam f is greater than or equal to the height h of the joining plane (3) of the plates (1 and 2).

13. Apparatus according to claims 6 and 8, characterised in that the emitting pick-ups (4) and the receiving pick-ups (5) are arranged in a housing which is movable, on the one hand, perpendicularly to the plates (1, 2) and, on the other hand, parallel to these plates (1, 2) and at a speed identical to the speed of displacement of said plates.

14. Apparatus according to claims 6 and 8, characterised in that the emitting pick-ups (4) and the receiving pick-ups (5) are arranged in a fixed housing which is in contact with the plates (1, 2), which pass underneath said housing.

## FIG.1

## FIG.2

## FIG.3

## FIG.4